# EUROPÄISCHE PATENTSCHRIFT

(11) **EP 2 609 676 B1**
(45) Veröffentlichungstag und Bekanntmachung des Hinweises auf die Patenterteilung: **21.08.2019**
(21) Anmeldenummer: 11714971.6
(22) Anmeldetag: 13.04.2011
(51) Int. Cl.: H02M 5/458, B60L 1/00, B60L 9/28

(54) **TRAKTIONSSTROMRICHTER**
TRACTION CONVERTER
CONVERTISSEUR DE TRACTION

(30) Priorität: 23.08.2010 DE 102010039640
(43) Veröffentlichungstag der Anmeldung: 03.07.2013
(73) Patentinhaber: Siemens Mobility GmbH, 81739 München (DE)
(72) Erfinder: WEIGEL, Jan, 91077 Großenbuch (DE); BAKRAN, Mark-Matthias, 91052 Erlangen (DE); NAGEL, Andreas, 90478 Nürnberg (DE)
(86) Internationale Anmeldenummer: PCT/EP2011/055799
(87) Internationale Veröffentlichungsnummer: WO 2012/031787

(56) Entgegenhaltungen:
- EP-A1- 1 750 363
- EP-A2- 0 904 973
- EP-A2- 0 952 030
- EP-A2- 1 226 994
- DE-A1- 19 841 132
- DE-A1- 19 908 495
- DE-A1- 19 941 170
- KUNS M ET AL: "ENTWICKLUNG EINER MASSEARMEN ENERGIEVERSORGUNG FUER ELEKTRISCHE TRIEBFAHRZEUGE DEVELOPING A LOW-MASS POWER SUPPLY FOR ELECTRIC RAIL VEHICLES DEVELOPPEMENT D'UNE ALIMENTATION ENERGIQUE A VEHICULES FERROVIAIRESELECTRIQUES", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 123, Nr. 11/12, 1. November 1999 (1999-11-01), Seiten 423-426, XP000877540, ISSN: 0941-0589
- WAGNER R: "TECHNOLOGISCHE PERSPEKTIVEN FUER FAHRZEUGE IM SPURGEFUEHRTEN HOCHGESCHWINDIGKEITSVERKEHR TECHNOLOGICAL PROSPECTS FOR VEHICLES OF RAIL-BORNE HIGH-SPEED TRAFFIC PERSECTIVES TECHNOLOGIQUES POUR VEHICULES DU TRAFIC GUIDE A GRANDE VITESSE", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 121, Nr. 2/03, 1. Februar 1997 (1997-02-01), Seiten 64-80, XP001023900, ISSN: 0941-0589

## Beschreibung

Die Erfindung bezieht sich auf einen Traktionsstromrichter gemäß Oberbegriff des Anspruchs 1.

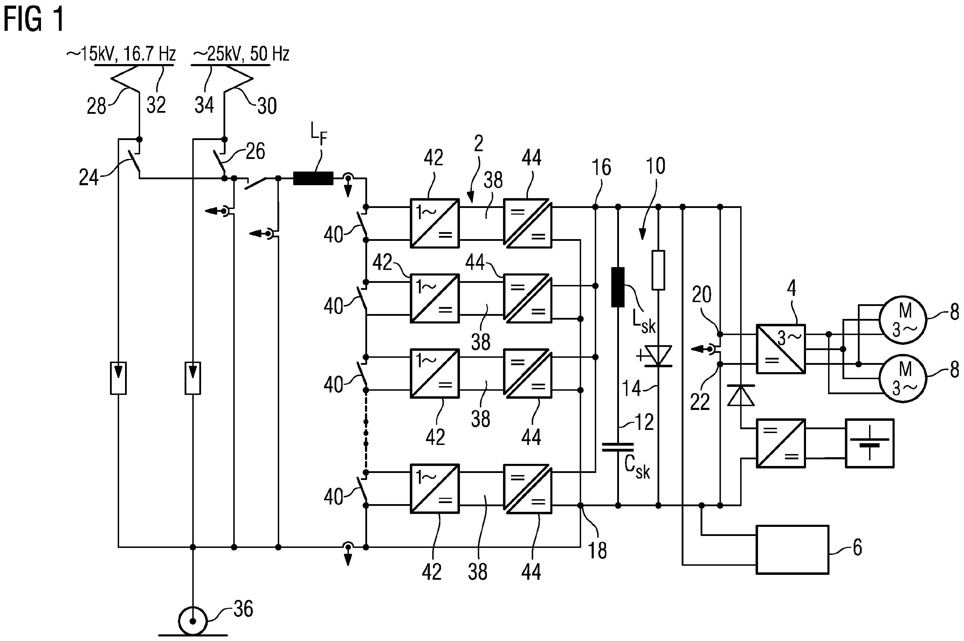

Ein gattungsgemäßer Traktionsstromrichter ist aus der in der FIG 1 näher dargestellten Ausführungsform, die aus der Veröffentlichung mit dem Titel "Medium Frequency Topology in Railway Applications" von Dr. Michael Steiner und Dr. Harry Reinold, abgedruckt im Konferenzband der European Conference on Power Electronics and Applications, Alborg 2007, bekannt ist.

Gemäß der Darstellung dieser FIG 1 weist ein gattungsgemäßer Traktionsstromrichter eine netzseitige Einspeisevorrichtung 2, einen lastseitigen selbstgeführten Pulsstromrichter 4 und einen Hilfsbetriebe-Stromrichter 6 auf. Am lastseitigen selbstgeführten Pulsstromrichter 4 sind zwei Drehstrommotoren 8 angeschlossen. Im Spannungszwischenkreis 10 dieses Traktionsstromrichters sind ein Saugkreis 12 und ein Kurzschließer 14 angeordnet. Mittels dieses Zwischenkreises 10 sind die beiden gleichspannungsseitigen Ausgänge 16 und 18 der netzseitigen Einspeisevorrichtung 2 und die gleichspannungsseitigen Eingänge 20 und 22 des lastseitigen selbstgeführten Pulsstromrichters 4 elektrisch leitend miteinander verbunden. Die netzseitige Einspeisevorrichtung 2 ist mittels einer Eingangsdrossel L_{F}, eines Schützes 24 bzw. 26 und eines Stromabnehmers 28 bzw. 30 mit einem Fahrdraht 32 bzw. 34 verbindbar. Der Fahrdraht 32 weist eine Netzwechselspannung von 15kV, 16.7Hz auf, wogegen der Fahrdraht 34 eine Netzwechselspannung von 25kV, 50Hz aufweist. Diese Spannungen stehen zwischen Fahrdraht 32 bzw. 34 und einem Rad 36 eines schienengebundenen Fahrzeugs an. Diese Netzwechselspannung fällt somit an einer Vielzahl elektrisch in Reihe geschalteter Stromrichter-Gruppen 38 ab.

Jede Stromrichter-Gruppe 38 weist eingangsseitig einen Schalter 40 auf, mit dem eine fehlerhafte Stromrichter-Gruppe 38 kurzgeschlossen werden kann, damit der Traktionsstromrichter redundant weiterbetrieben werden kann. Jede Stromrichter-Gruppe 38 weist netzseitig einen Vierquadrantensteller 42 und gleichspannungsseitig einen Serienresonanz-DC/DC-Stromrichter 44 in Vollbrückenschaltung auf. Diese beiden Stromrichterschaltungen 42 und 44 sind gleichspannungsseitig miteinander verknüpft. Die genauen Schaltungsausführungen dieser Stromrichterschaltungen 42 und 44 einer jeden Stromrichter-Gruppe 38 der Einspeisevorrichtung 2 sind der eingangs genannten Veröffentlichung entnehmbar. Ausgangsseitig sind diese Serienresonanz-DC/DC-Stromrichter 44 elektrisch parallel geschaltet.

Bei dieser Ausführungsform der Einspeisevorrichtung 2 eines Traktionsstromrichters weist eine Mittelfrequenz-Transformator-Einrichtung eine Vielzahl von einphasigen Transformatoren, die nicht untereinander magnetisch gekoppelt sind, auf. Dadurch bildet jede Stromrichter-Gruppe 38 eine selbstständige Baueinheit. Somit kann abhängig von der Netzspannung eine beliebige Anzahl von Stromrichter-Gruppen 38 kaskadiert werden.

Mittels dieser netzseitigen Einspeisevorrichtung 2 eines Traktionsstromrichters wird der ansonsten verwendete Traktionstransformator ersetzt, der insbesondere bei einer Netzfrequenz von 16.7Hz groß und schwer ist. Durch diese Einspeisevorrichtung 2 können 50% des Gewichts und 30% des Bauvolumens eines Traktionstransformators eingespart werden. Da kein Traktionstransformator mehr benötigt wird, wird diese Einspeisevorrichtung 2 eines Traktionsstromrichters als netztrafolose Einspeisevorrichtung bezeichnet.

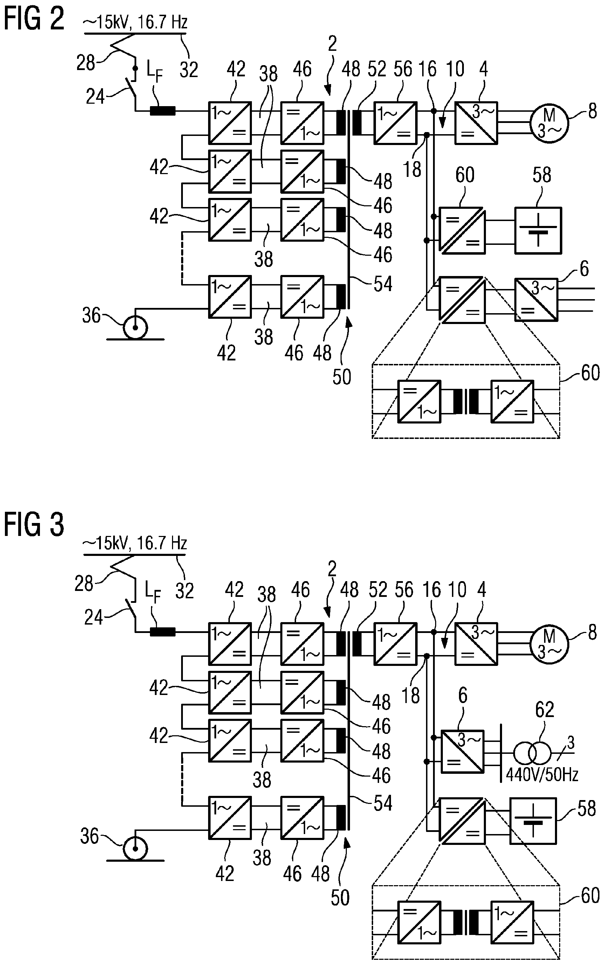

In der FIG 2 ist eine zweite Ausführungsform der Einspeisevorrichtung 2 eines gattungsgemäßen Traktionsstromrichters näher dargestellt. Eine derartig ausgebildete Einspeisevorrichtung 2 ist aus der Veröffentlichung "15kV/16.7Hz Energy Supply System with Medium Frequency Transformer and 6.5kV IGBTs in Resonant Operation" von B. Engel, M. Victor, G. Bachmann und A. Falk, veröffentlicht im Konferenzband der EPE-Konferenz 2003 in Toulouse, bzw. aus der EP 1 226 994 A1 bekannt. Gemäß dieser Veröffentlichung bzw. der EP-Offenlegungsschrift weist jede Stromrichter-Gruppe 38 einen netzseitigen Vierquadrantensteller 42 und ausgangsseitig einen serienresonanten Stromrichter 46 auf, die gleichspannungsseitig elektrisch parallel geschaltet sind. Ausgangsseitig ist jeder serienresonante Stromrichter 46 mit einer Primärwicklung 48 eines Mittelfrequenz-Transformators 50 elektrisch leitend verbunden, der sekundärseitig eine Sekundärwicklung 52 aufweist. Die Vielzahl der Primärwicklungen 48 und die Sekundärwicklung 52 sind gemeinsam auf einem Kern 54 angeordnet, so dass diese Wicklungen 48 und 52 magnetisch gekoppelt sind. Dieser Mittelfrequenz-Transformator 50 mit seinen Wicklungen 48 und 52 auf einem gemeinsamen Kern 54 bildet eine weitere Ausführungsform der Mittelfrequenz-Transformator-Einrichtung der Einspeisevorrichtung 2. Die Sekundärwicklung 52 ist mit einem Ausgangs-Stromrichter 56 verknüpft, dessen beide gleichspannungsseitigen Anschlüsse die gleichspannungsseitigen Ausgänge 16 und 18 der Einspeisevorrichtung 2 bilden. Als Ausgangs-Stromrichter 56 ist ein Vierquadrantensteller vorgesehen, der ausgangsseitig mit einem Stützkondensator mit elektrisch parallel geschaltetem Saugkreis verbunden ist. Der Stützkondensator und der Saugkreis sind aus Gründen der Übersichtlichkeit nicht näher dargestellt. Der genaue Aufbau einer jeden Stromrichter-Gruppe 38 ist der genannten Veröffentlichung bzw. der EP-Offenlegungsschrift entnehmbar.

Diese Ausführungsform des Traktionsstromrichters weist außerdem einen Hilfsbetriebe-Stromrichter 6 und eine Batterie 58 auf. Dieser Hilfsbetriebe-Stromrichter 6 und die Batterie 58 sind jeweils mittels eines potentialtrennenden DC/DC-Wandler 60 mit den gleichspannungsseitigen Anschlüssen 16 und 18 der Einspeisevorrichtung 2 verknüpft. Dieser potentialtrennende DC/DC-Wandler 60 wird benötigt, um die Eingangs-Gleichspannung des Hilfsbetriebe-Stromrichters 6 von beispielsweise 670V an eine Zwischenkreisspannung des Traktionsstromrichters von beispielsweise 3kV anzupassen. Außerdem muss der Hilfsbetriebe-Stromrichter 6 vom Zwischenkreis 10 des Traktionsstromrichters potentialmäßig getrennt werden, da der Hilfsbetriebe-Stromrichter 6 ein symmetrisches Wechselspannungssystem von beispielsweise 3AC 440V gegen Erdpotential liefert. Als potentialtrennender DC/DC-Wandler 60 kann ein serienresonanter DC/DC-Stromrichter gemäß FIG 2 der eingangs genannten Veröffentlichung verwendet werden.

In FIG 3 ist eine Variante der Ausführungsform der FIG 2 näher dargestellt, die sich von der Variante der FIG 2 dadurch unterscheidet, dass der Hilfsbetriebe-Stromrichter 6 gleichspannungsseitig mit den gleichspannungsseitigen Ausgängen 16 und 18 der Einspeisevorrichtung 2 direkt verknüpft ist. Für die Spannungsanpassung und die Potentialtrennung sind wechselspannungsseitige Anschlüsse des Hilfsbetriebe-Stromrichters 6 mit einem Transformator 62, an dessen Ausgang eine Versorgungsspannung von 440V,50Hz ansteht, verbunden.

Die Ausführungen des Traktionsstromrichters gemäß FIG 1 bzw. 2 benötigen für die Anbindung des Hilfsbetriebe-Stromrichters 6 an den Zwischenkreis 10 einen potentialtrennenden DC/DC-Wandler 60, wobei als Stromrichterventile der dem Zwischenkreis 10 zugewandten Brückenschaltung wegen der hohen Zwischenkreisspannung von beispielsweise 3kV abschaltbare Hochspannungs-Halbleiterschalter, insbesondere High Voltage-Insulated-Gate-Bipolar-Transistoren (HV-IGBT), benötigt werden. Diese HV-IGBTs weisen hinsichtlich ihres Mittelfrequenz-Schaltverhaltens hohe Verluste auf. Neben den Verlusten, die bei jeder Energiewandlung auftreten, weist der potentialtrennende DC/DC-Wandler 60 einen Transformator und gegebenenfalls noch weitere induktive Komponenten (Drosseln) auf, wodurch das Volumen und die Masse des Hilfsbetriebe-Energieversorgungspfades ansteigt. Mit diesem Anstieg steigen auch die Kosten eines derartigen Traktionsstromrichters an.

Aus dem Dokument DE 199 41 170 A1 ist ein Einspeisesystem für Netze mit hohen Spannungen und niedriger Netzfrequenz bekannt. Diese Anordnung kann verlustarm mit merklich niedrigerem Gewicht als ein niederfrequent betriebener Transformator gestaltet werden.

Aus dem Dokument DE 199 08 495 A1 ist eine transformatorlose Einspeiseschaltung für Bahnfahrzeuge bekannt, bei der netzseitig mehrere Stromrichter mit Eingangsschaltungen angeordnet sind. Diese Stromrichter weisen jeweils einen netzseitigen Vierquadrantensteller auf, wobei diese netzseitigen Vierquadrantensteller in Reihe schaltbar sind.

Aus dem Dokument EP 0 904 973 A2 ist ein Betriebsverfahren für ein Stromsystem eines Schienenfahrzeugs bekannt, das Traktionsantriebe und Hilfsaggregate aufweist und über mindestens einen Stromabnehmer aus einem externen Stromnetz mit Gleich- oder Wechselstrom versorgt wird.

Der Erfindung liegt nun die Aufgabe zugrunde, den bekannten Traktionsstromrichter derart weiterzubilden, dass die genannten Nachteile nicht mehr auftreten.

Diese Aufgabe wird im Zusammenhang mit den Merkmalen des Anspruchs 1 erfindungsgemäß gelöst.

Dadurch, dass der Hilfsbetriebe-Stromrichter mittels einer Einrichtung zur Auskopplung einer Hilfsbetriebe-Leistung aus einer Hauptfeldspannung der Mittelfrequenz-Transformator-Einrichtung der Einspeisevorrichtung des Traktionsstromrichters verknüpft ist, werden im Hilfsbetriebe-Energieversorgungspfad zwei Energieumwandlungen weniger verwendet, wodurch sich sein Wirkungsgrad erhöht. Da die Einrichtung zur Auskopplung nicht mehr mit dem Zwischenkreis des Traktionsstromrichters, sondern mit der Mittelfrequenz-Transformator-Einrichtung der Einspeiseschaltung verknüpft ist, werden im Hilfsbetriebe-Energieversorgungspfad keine abschaltbaren Hochspannungs-Halbleiterschalter mehr benötigt, so dass sich die Verluste beim mittelfrequenten Schalten verringern.

Außerdem verringert sich der Bauteileaufwand, da zwei Energiewandlungen entfallen. Daraus resultiert nicht nur eine höhere Zuverlässigkeit, sondern auch ein geringerer Platzbedarf in Verbindung mit einer Gewichtsreduzierung.

Ausführungsformen der Einrichtung zur Auskopplung einer Hilfsbetriebeleistung sind den Unteransprüchen entnehmbar, wobei diese Ausführungsformen von der Ausführungsform der Einspeiseschaltung, insbesondere der Mittelfrequenz-Transformator-Einrichtung, des Traktionsstromrichters abhängig sind.

Zur weiteren Erläuterung der Erfindung wird auf die Zeichnung Bezug genommen, in der Ausführungen einer erfindungsgemäßen Anbindung eines Hilfsbetriebe-Stromrichters bei einem Traktionsstromrichter mit einer netztrafolosen Einspeisevorrichtung schematisch veranschaulicht sind.
- FIG 1: zeigt eine erste Ausführungsform eines gattungsgemäßen Traktionsstromrichters, wogegen in der
- FIG 2: eine zweite Ausführungsform eines gattungsgemäßen Traktionsstromrichters dargestellt ist, die
- FIG 3: zeigt eine Variante der zweiten Ausführungsform eines Traktionsstromrichters nach FIG 2, und die
- FIG 4: zeigt eine Ausführungsform eines Traktionsstromrichters nach Stand der Technik, wobei in den
- FIG 5 bis 9: Ausführungsformen nach der Erfindung dargestellt sind.

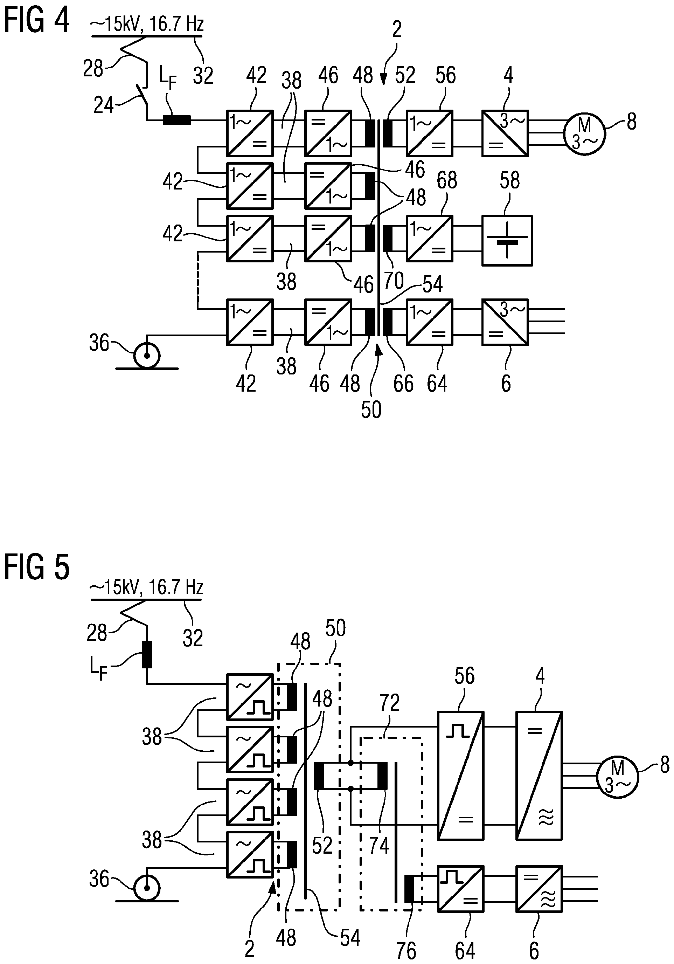

In FIG 4 ist eine Ausführungsform eines Traktionsstromrichters mit einer netzseitigen Einspeisevorrichtung 2 in der Ausführungsform gemäß FIG 2 näher dargestellt. Gemäß dieser Ausgestaltung ist als Einrichtung zur Auskopplung einer Hilfsbetriebeleistung aus einer Hauptfeldspannung der Mittelfrequenz-Transformator-Einrichtung ein weiterer Ausgangs-Stromrichter 64 vorgesehen, der wechselspannungsseitig mit einer weiteren Sekundärwicklung 66 des Mittelfrequenz-Transformators 50, der ebenfalls auf dem Kern 54 angeordnet ist, elektrisch leitend verbunden ist. An den gleichspannungsseitigen Anschlüssen dieses Ausgangs-Stromrichters 64 sind die beiden gleichspannungsseitigen Eingangsanschlüsse des Hilfsbetriebe-Stromrichters 6 angeschlossen. Auch die Batterie 58 ist mittels eines weiteren Ausgangs-Stromrichters 68 mit einer weiteren Sekundärwicklung 70 des Mittelfrequenz-Transformators 50 verknüpft. Diese beiden Ausgangs-Stromrichter 64 und 68 können genauso ausgeführt sein, wie der Ausgangs-Stromrichter 56 der Einspeisevorrichtung 2. Das heißt, als Realisierung des Ausgangs-Stromrichters 64 bzw. 68 wird jeweils ein Vierquadrantsteller vorgesehen, der wechselspannungsseitig parallel zu einer korrespondierenden weiteren Sekundärwicklung 66 bzw. 70 geschaltet ist. Mittels der weiteren Sekundärwicklung 66 wird eine gewünschte Hilfsbetriebeleistung direkt aus der Hauptfeldspannung des Mittelfrequenz-Transformators 50 der Einspeisevorrichtung 2 ausgekoppelt. Diese weitere Sekundärwicklung 66, an der der Hilfsbetriebe-Stromrichter mittels des zweiten Ausgangs-Stromrichters 64 angeschlossen ist, wird auch als Hilfsbetriebe-Wicklung 66 bezeichnet. Wegen einer Spannungsanpassung wird für diese Hilfsbetriebe-Wicklung 66 eine vorbestimmte Windungszahl gewählt.

Da eine gewünschte Hilfsbetriebeleistung direkt aus der Hauptfeldspannung des Mittelfrequenz-Transformators 50 der Einspeisevorrichtung 2 ausgekoppelt wird, weist die Anbindung des Hilfsbetriebe-Stromrichters 6 gegenüber einer bekannten Anbindung gemäß FIG 1 bzw. 2 einen Hilfsbetriebe-Energieversorgungspfad auf, der zwei Energieumwandlungen weniger aufweist. Dadurch erhöht sich der Wirkungsgrad. Darüber hinaus werden keine abschaltbaren Hochspannungs-Halbleiterschalter, insbesondere High-Voltage-Insulated-Gate-Bipolar-Transistoren (HV-IGBT), für die Stromrichterventile des zusätzlichen Ausgangs-Stromrichters 64 benötigt. Derartige abschaltbare HV-IGBTs weisen hinsichtlich ihres Mittelfrequenz-Schaltverhaltens hohe Verluste auf. Da derartige HV-IGBTs nicht mehr vonnöten sind, verringern sich die Verluste im Hilfsbetriebe-Energieversorgungspfad, wodurch sich der Wirkungsgrad erhöht. Ein weiterer Vorteil besteht darin, dass durch den Austausch des potentialtrennenden DC/DC-Wandlers 60 der Ausführungsform gemäß FIG 2 durch den weiteren Ausgangs-Stromrichter 64 ein Mittelfrequenz-Transformator und abschaltbare Hochspannungs-Halbleiterschalter im Hilfsbetriebe-Energieversorgungspfad eingespart werden, wodurch sich der Platzbedarf und damit das Gewicht für eine Hilfsbetrieb-Stromversorgung verringert, deren Zuverlässigkeit aber erhöht wird. Durch diese Verringerung des Gewichtes des Hilfsbetriebe-Energieversorgungspfades werden Kosten eingespart.

Die FIG 5 zeigt eine erste Ausführungsform eines Traktionsstromrichters nach der Erfindung. Auch dieser Traktionsstromrichter weist eine Einspeisevorrichtung 2 auf, die wie in der Ausführungsform gemäß FIG 4 einen Mittelfrequenz-Transformator 50 als Mittelfrequenz-Transformator-Einrichtung der Einspeisevorrichtung 2 aufweist. Bei diesem Mittelfrequenz-Transformator 50 sind eine Vielzahl von Primärwicklungen 48 und eine Sekundärwicklung 52 mittels eines Kerns 54 miteinander magnetisch gekoppelt. Bei dieser Ausführungsform ist als Einrichtung zur Auskopplung einer vorbestimmten Hilfsbetriebeleistung aus einer Hauptfeldspannung des Mittelfrequenz-Transformators 50 ein Mittelfrequenz-Hilfsbetriebe-Transformator 72 mit einem nachgeschalteten weiteren Ausgangs-Stromrichter 64 vorgesehen. Der Mittelfrequenz-Hilfsbetriebe-Transformator 72 ist einphasig ausgebildet, wobei dessen Primärwicklung 74 elektrisch parallel zur Sekundärwicklung 52 des Mittelfrequenz-Transformators 50 der trafolosen Einspeisevorrichtung 2 eines Traktionsstromrichters geschaltet ist. Seine Sekundärwicklung 76 ist elektrisch parallel zu wechselspannungsseitigen Anschlüssen des weiteren Ausgangs-Stromrichters 64, insbesondere eines Vierquadrantenstellers, geschaltet. Mit den gleichspannungsseitigen Anschlüssen dieses Ausgangs-Stromrichters 64 ist der Hilfsbetriebe-Stromrichter 6 mit seinen gleichspannungsseitigen Anschlüssen verknüpft. Der Vorteil dieser Ausführungsform besteht darin, dass der Mittelfrequenz-Transformator 50 unverändert bleibt. Eine Spannungsanpassung erfolgt durch das Übersetzungsverhältnis des Mittelfrequenz-Hilfsbetriebe-Transformators 72.

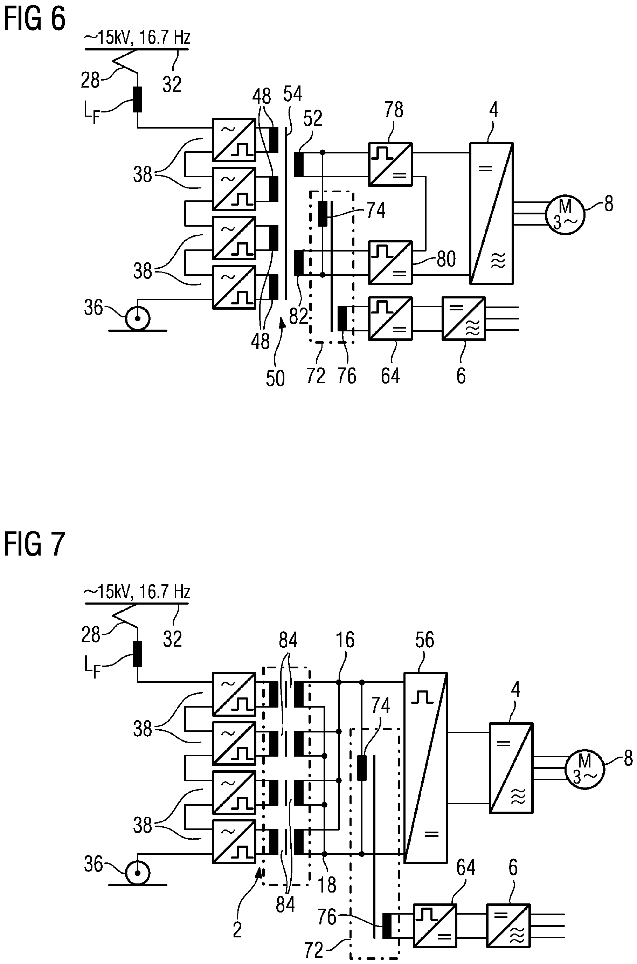

In FIG 6 ist eine weitere Ausführungsform des erfindungsgemäßen Traktionsstromrichters dargestellt, die sich von der Ausführungsform gemäß FIG 5 dadurch unterscheidet, dass diese netztrafolose Einspeisevorrichtung 2 anstelle eines Ausgangs-Stromrichters 56 zwei Ausgangs-Stromrichter 78 und 80 aufweist, die gleichspannungsseitig elektrisch in Reihe geschaltet sind. Diese beiden Ausgangs-Stromrichter 78 und 80 sind wechselspannungsseitig jeweils mit einer Sekundärwicklung 52 und 82 verbunden. Die Primärwicklung 74 des Mittelfrequenz-Hilfsbetriebe-Transformators 72 ist elektrisch parallel zu den beiden wechselspannungsseitigen Anschlüssen der beiden elektrisch in Reihe geschalteten Ausgangs-Stromrichter 78 und 80 geschaltet.

Bei einer weiteren Ausführungsform des erfindungsgemäßen Traktionsstromrichters gemäß FIG 7 ist als Mittelfrequenz-Transformator-Einrichtung eine Vielzahl von Einzeltransformatoren 84 vorgesehen, die sekundärseitig alle elektrisch parallel geschaltet sind. Elektrisch parallel zu den gleichspannungsseitigen Ausgängen 16 und 18 der Mittelfrequenz-Transformator-Einrichtung ist der Ausgangs-Stromrichter 56 mit nachgeschalteten selbstgeführten Pulsstromrichter 4 und die Primärwicklung 74 des Mittelfrequenz-Hilfsbetriebe-Transformators 72 geschaltet.

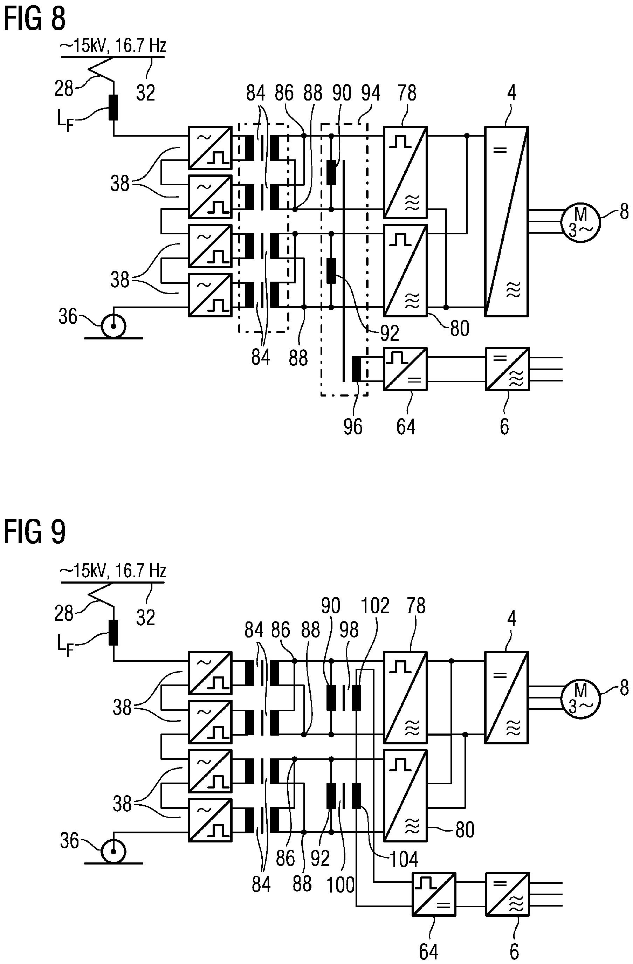

Bei einer weiteren Ausführungsform des erfindungsgemäßen Traktionsstromrichters gemäß FIG 8 ist die Vielzahl der Einzeltransformatoren 84 der Mittelfrequenz-Transformator-Einrichtung in zwei Gruppen unterteilt. Dies wird dadurch erreicht, dass jeweils die Einzeltransformatoren 84 einer Gruppe sekundärseitig elektrisch parallel geschaltet sind. Elektrisch parallel zu den Ausgangs-Anschlüssen 86 und 88 einer jeden Gruppe ist eine Primärwicklung 90 und 92 eines Mittelfrequenz-Hilfsbetriebe-Transformators 94 und ein Ausgangs-Stromrichter 78 und 80 geschaltet. Eine Sekundärwicklung 96 des Mittelfrequenz-Hilfsbetriebe-Transformators 94 ist ausgangsseitig mit dem weiteren Ausgangs-Stromrichter 64 verknüpft. Die beiden Ausgangs-Stromrichter 78 und 80 sind bei dieser Ausführungsform gleichspannungsseitig elektrisch parallel geschaltet.

In einer weiteren Ausführungsform des erfindungsgemäßen Traktionsstromrichters gemäß der FIG 9 sind die Vielzahl von Einzeltransformatoren 84 der Mittelfrequenz-Transformator-Einrichtung der netztrafolosen Einspeisevorrichtung 2 eines Traktionsstromrichters ebenfalls kaskadiert. Elektrisch parallel zu den Ausgängen 86 und 88 zweier der Transformatoren 84 ist ein Mittelfrequenz-Hilfsbetriebe-Transformator 98 bzw. 100 geschaltet. Die Sekundärwicklungen 102 und 104 dieser beiden Mittelfrequenz-Transformatoren 98 und 100 sind elektrisch in Reihe geschaltet. Elektrisch parallel zu dieser Reihenschaltung von Sekundärwicklungen 102 und 104 ist der weitere Ausgangs-Stromrichter 64 mit nachgeschaltetem Hilfsbetriebe-Stromrichter 6 geschaltet.

In den Ausführungsformen der FIG 5 bis 9 ist für jeden Traktionsstromrichter mit einer netztrafolosen Einspeisevorrichtung 2 jeweils eine Ausführungsform für eine erfindungsgemäße Einrichtung zur Auskopplung einer gewünschten Hilfsbetriebeleistung aus einer Hauptfeldspannung der Mittelfrequenz-Tranformator-Einrichtung einer trafolosen Einspeisevorrichtung 2 angegeben, mit der ein Hilfsbetriebe-Stromrichter 6 erfindungsgemäß mit der Einspeisevorrichtung 2 und nicht mehr mit einem Zwischenkreis 10 des Traktionsumrichters verbunden ist. Durch diese Ausführungsformen einer erfindungsgemäßen Einrichtung zur Auskopplung einer vorbestimmten Hilfsbetriebeleistung aus einer Hauptfeldspannung der Mittelfrequenz-Transformator-Einrichtung einer Einspeiseschaltung 2 eines transformatorlosen Traktionsstromrichters werden zwei Energieumwandlungen im Hilfsbetriebe-Energieversorgungspfade eingespart, die zu einer Kosteneinsparung führen und die Zuverlässigkeit erhöht.

## Patentansprüche

1. Traktionsstromrichter mit einer netzseitigen Einspeisevorrichtung (2), einem lastseitigen selbstgeführten Pulsstromrichter (4) und einem Hilfsbetriebe-Stromrichter (6), wobei diese Einspeisevorrichtung (2) eingangsseitig eine Vielzahl elektrisch in Reihe geschalteter primärer Stromrichter-Gruppen (38) aufweist, die mittels einer Mittelfrequenz-Transformator-Einrichtung mit wenigstens einem Ausgangs-Stromrichter (56) verknüpft sind, dessen gleichspannungsseitige Anschlüsse mit gleichspannungsseitigen Anschlüssen des lastseitigen selbstgeführten Pulsstromrichters (4) elektrisch leitend verbunden sind, wobei der Hilfsbetriebe-Stromrichter (6) mit einer Einrichtung zur Auskopplung einer Hilfsbetriebeleistung aus der Mittelfrequenz-Transformator-Einrichtung verknüpft ist, wobei die Einrichtung zur Auskopplung ein Mittelfrequenz-Hilfsbetriebe-Transformator (72,94,98,100) mit sekundärseitigem weiteren Ausgangs-Stromrichter (64) ist, dessen gleichspannungsseitige Anschlüsse mit gleichspannungsseitigen Anschlüssen des Hilfsbetriebe-Stromrichters (6) verknüpft sind.

2. Traktionsstromrichter nach Anspruch 1, **dadurch gekennzeichnet, dass** der Mittelfrequenz-Hilfsbetriebe-Transformator (72,94) einphasig ausgeführt ist.

3. Traktionsstromrichter nach Anspruch 2, **dadurch gekennzeichnet, dass** der einphasige Mittelfrequenz-Hilfsbetriebe-Transformator (94) zwei Primärwicklungen (90, 92) aufweist, die mittels eines Kerns magnetisch gekoppelt sind.

4. Traktionsstromrichter nach Anspruch 2, **dadurch gekennzeichnet, dass** die Sekundärwicklungen (102,104) zweier einphasiger Mittelfrequenz-Hilfsbetriebe-Transformatoren (98,100) elektrisch in Reihe geschaltet sind und die jeweils mittels eines Kerns mit einer Primärwicklung (90, 92) gekoppelt sind.

5. Traktionsstromrichter nach einem der vorgenannten Ansprüche, **dadurch gekennzeichnet, dass** die primäre Stromrichter-Gruppe (38) eingangsseitig einen Vierquadrantensteller (42) und ausgangsseitig einen resonant schaltenden Stromrichter (46) aufweist, die gleichspannungsseitig miteinander verknüpft sind.

6. Traktionsstromrichter nach einem der Ansprüche 1 bis 4, **dadurch gekennzeichnet, dass** die Mittelfrequenz-Transformator-Einrichtung eine Vielzahl von Primärwicklungen (48) und wenigstens eine Sekundärwicklung (52) auf einem Kern (54) aufweist.

7. Traktionsstromrichter nach einem der Ansprüche 1 bis 4, **dadurch gekennzeichnet, dass** die Mittelfrequenz-Transformator-Einrichtung eine Vielzahl von einphasigen Transformatoren (84) aufweist.

8. Traktionsstromrichter nach Anspruch 1, **dadurch gekennzeichnet, dass** als weiterer Ausgangs-Stromrichter (64) ein Vierquadrantensteller vorgesehen ist.

## Claims

1. Traction converter having a mains-side supply device (2), a load-side self-commutated pulse converter (4) and an auxiliary power converter (6), wherein said supply device (2) has a plurality of primary power converter groups (38) which are electrically connected in series on the input side and which by means of a medium-frequency transformer device are linked to at least one output power converter (56) whose DC-side terminals are electrically conductively connected to DC-side terminals of the load-side self-commutated pulse converter (4), wherein the auxiliary power converter (6) is linked to a device for tapping an auxiliary power from the medium-frequency transformer device, wherein the device for tapping is a medium-frequency auxiliary transformer (72, 94, 98, 100) with a secondary-side further output converter (64) whose DC-side terminals are linked to DC-side terminals of the auxiliary power converter (6).

2. Traction converter according to claim 1, **characterised in that** the medium-frequency auxiliary transformer (72, 94) is embodied as single-phase.

3. Traction converter according to claim 2, **characterised in that** the single-phase medium-frequency auxiliary transformer (94) has two primary windings (90, 92) which are magnetically coupled by means of a core.

4. Traction converter according to claim 2, **characterised in that** the secondary windings (102, 104) of two single-phase medium-frequency auxiliary transformers (98, 100) are electrically connected in series and are each coupled to a primary winding (90, 92) by means of a core.

5. Traction converter according to one of the preceding claims, **characterised in that** the primary converter group (38) has a four-quadrant controller (42) on the input side and has a resonant switching converter (46) on the output side, which are linked to one another on the DC side.

6. Traction converter according to one of claims 1 to 4, **characterised in that** the medium-frequency transformer device has a plurality of primary windings (48) and at least one secondary winding (52) on a core (54).

7. Traction converter according to one of claims 1 to 4, **characterised in that** the medium-frequency transformer device has a plurality of single-phase transformers (84).

8. Traction converter according to claim 1, **characterised in that** a four-quadrant controller is provided as a further output power converter (64).

## Revendications

1. Convertisseur de traction, comprenant un système (2) d'alimentation du côté du réseau, un convertisseur (4) à impulsion à commutation automatique du côté de la charge et un onduleur (6) de secours, ce système (2) d'alimentation ayant, du côté de l'entrée, une pluralité de groupes (38 ) d'onduleurs primaires montés en série électriquement qui, au moyen d'un dispositif de transformateur à moyenne fréquence, sont connectés à au moins un onduleur (56) de sortie, dont les bornes du côté de la tension continue sont reliées d'une manière conductrice de l'électricité à des bornes du côté de la tension continue du convertisseur (4) à impulsion à commutation autonome du côté de la charge, l'onduleur (6) de secours étant connecté à un dispositif de découplage d'une puissance de secours du dispositif de transformateur à moyenne fréquence, le dispositif de découplage étant un transformateur (72, 94, 98, 100) de secours à moyenne fréquence ayant d'autres onduleurs (64) de sortie du côté secondaire, dont les bornes du côté de la tension continue sont connectées à des bornes du côté de la tension continue de l'onduleur (6) de secours.

2. Convertisseur de traction suivant la revendication 1,
**caractérisé en ce que** le transformateur (72, 94) de secours à moyenne fréquence est monophasé.

3. Convertisseur de traction suivant la revendication 2,
**caractérisé en ce que** le transformateur (94) de secours à moyenne fréquence monophasé a deux enroulements (90, 92) primaires, qui sont couplés magnétiquement au moyen d'un noyau.

4. Convertisseur de traction suivant la revendication 2,
**caractérisé en ce que** les enroulements (102, 104) secondaires de deux transformateurs (98, 100) de secours à moyenne fréquence monophasés sont montés en série électriquement et sont couplés chacun au moyen d'un noyau à un enroulement (90, 92) primaire.

5. Convertisseur de traction suivant l'une des revendications précédentes, **caractérisé en ce que** le groupe (38) d'onduleurs primaires a, du côté de l'entrée, un régleur (42) sur quatre cadrans et, du côté de la sortie, un onduleur (46) à montage en résonance, qui sont connectés entre eux du côté de la tension continue.

6. Convertisseur de traction suivant l'une des revendications 1 à 4,
**caractérisé en ce que** le dispositif de transformateur à moyenne fréquence a une pluralité d'enroulements (48) primaires et au moins un enroulement (52) secondaire sur un noyau (54).

7. Convertisseur de traction suivant l'une des revendications 1 à 4,
**caractérisé en ce que** le dispositif de transformateur à moyenne fréquence a une pluralité de transformateurs (84) monophasés.

8. Convertisseur de traction suivant la revendication 1,
**caractérisé en ce qu'**il est prévu un régleur sur quatre cadrans, comme autre onduleur (64) de sortie.
